# EUROPÄISCHE PATENTSCHRIFT

(11) **EP 4 096 971 B1**
(45) Veröffentlichungstag und Bekanntmachung des Hinweises auf die Patenterteilung: **18.09.2024**
(21) Anmeldenummer: 21703366.1
(22) Anmeldetag: 20.01.2021
(51) Int. Cl.: B60R 21/09, B60R 21/206, B60R 21/231, B62D 1/187, B62D 1/19, B62D 1/04, B62D 1/11

(54) **INSASSENSICHERHEITSSYSTEM FÜR EIN KRAFTFAHRZEUG SOWIE VERFAHREN ZUM BETREIBEN EINES SOLCHEN INSASSENSICHERHEITSSYSTEMS**
OCCUPANT SAFETY SYSTEM FOR A MOTOR VEHICLE, AND METHOD FOR OPERATING AN OCCUPANT SAFETY SYSTEM OF THIS TYPE
SYSTÈME DE SÉCURITÉ D'OCCUPANT D'UN VÉHICULE AUTOMOBILE ET PROCÉDÉ DE FONCTIONNEMENT D'UN SYSTÈME DE SÉCURITÉ D'OCCUPANT DE CE TYPE

(30) Priorität: 27.01.2020 DE 102020101803
(43) Veröffentlichungstag der Anmeldung: 07.12.2022
(73) Patentinhaber: ZF Automotive Germany GmbH, 73553 Alfdorf (DE)
(72) Erfinder: HERWIG, Tillmann, 70190 Stuttgart (DE); MARTIN, Roberto, 73547 Lorch (DE); ZIMMERMANN, Lars, 73614 Schorndorf (DE); SCHMID, Simon, 73572 Heuchlingen (DE); TAMME, Sven, 73553 Alfdorf (DE)
(74) Vertreter: ZF Patentabteilung - DIPS
(86) Internationale Anmeldenummer: PCT/EP2021/051152
(87) Internationale Veröffentlichungsnummer: WO 2021/151750

(56) Entgegenhaltungen:
- DE-A1- 102008 000 546
- US-A1- 2004 026 903
- US-A1- 2018 037 248
- US-A1- 2019 381 962
- US-A1- 2020 001 815

## Beschreibung

Die Erfindung betrifft ein Insassensicherheitssystem für ein Kraftfahrzeug, mit einem Lenkrad, das zur Fahrtrichtungsänderung um eine Lenkachse drehbar ist und einen Lenkradkranz zur manuellen Betätigung des Lenkrads aufweist, wobei der Lenkradkranz zwischen einer Lenkbetriebsstellung und einer Insassensicherheitsstellung bewegbar ist, wobei der Lenkradkranz eine Kranzebene aufspannt, die sich in der Lenkbetriebsstellung senkrecht zur Lenkachse erstreckt, wobei der Lenkradkranz in seiner Insassensicherheitsstellung gegenüber der Lenkbetriebsstellung entlang der Lenkachse translatorisch verschoben ist, wobei ein außerhalb des Lenkrads verbautes Kniegassackmodul vorgesehen ist, welches einen Kniegassack aufweist, der sich bei einer Modulaktivierung in einen Raum zwischen einer Armaturentafel des Kraftfahrzeugs und einem Fahrzeuginsassen erstreckt. Darüber hinaus betrifft die Erfindung auch ein Verfahren zum Betreiben eines solchen Insassensicherheitssystems.

Insassensicherheitssysteme für Kraftfahrzeuge sind insbesondere fahrerseitig eine technische Herausforderung. Fahrerseitige Frontgassackmodule sind derzeit häufig noch im Nabenbereich drehbarer Lenkräder untergebracht. Aufgrund der Lenkraddrehung sind die Fahrergassäcke im Wesentlichen rotationssymmetrisch ausgebildet und können in ihrer Form nur sehr begrenzt an den Fahrzeuginnenraum angepasst werden. Ferner ist nach Erfassung einer Fahrzeugkollision das Zeitintervall zur Bereitstellung einer Insassenrückhaltung äußerst kurz, sodass der Gassack sehr schnell aus dem Nabenbereich des Lenkrads austreten und sich rasch entfalten muss. Dies kann unter Umständen zu einer Beeinträchtigung des Rückhaltekomforts führen, insbesondere wenn sich ein Fahrzeuginsasse bei einer Aktivierung des Gassackmoduls sehr nah am Lenkrad befindet. Darüber hinaus beansprucht das Gassackmodul einen beachtlichen Bauraum im Lenkrad, wodurch die Gestaltungsfreiheit beim Lenkraddesign deutlich beeinträchtigt wird. Schließlich ergeben sich durch eine Unterbringung des fahrerseitigen Frontgassackmoduls im Lenkrad auch Einschränkungen hinsichtlich möglicher Innenraumkonzepte für Kraftfahrzeuge mit automatisierten Fahrfunktionen.

Aus der DE 198 60 804 A1 ist bereits ein Insassensicherheitssystem bekannt, bei dem der fahrerseitige Frontgassack außerhalb des Lenkrads hinter einer Instrumententafel angeordnet ist und bei einer Modulaktivierung an einer Oberseite der Instrumententafel austritt. Ferner wird das Lenkrad bei einer Fahrzeugkollision durch einen Antrieb translatorisch entlang einer Längsachse vom Fahrer weg in Richtung zur Instrumententafel verlagert, um mehr Raum für die Entfaltung des Fahrergassacks zwischen dem Fahrzeuginsassen und dem Lenkrad bereitzustellen. Trotz dieser translatorischen Verlagerung kann das Lenkrad bei einer Fahrzeugkollision in Kontakt mit dem Fahrzeuginsassen kommen sowie die Entfaltung eines Gassacks, insbesondere eines Kniegassacks, behindern.

Die DE 10 2008 000 546 A1 offenbart ein Insassensicherheitssystem mit den Merkmalen im Oberbegriff des Anspruchs 1, bei dem das Lenkrad im Falle einer Aktivierung des Kniegassackmoduls entlang der Lenkachse translatorisch so in Richtung zu einem Fahrzeuginsassen verschoben wird, dass sich der Kniegassack ungehindert zwischen einer Armaturentafel und dem Insassen entfalten kann.

In der US 2020/0001815 A1 ist ein Insassensicherheitssystem mit einem außerhalb des Fahrzeuglenkrads verbauten Frontgassackmodul gezeigt, wobei das Fahrzeuglenkrad im Falle einer Modulaktivierung entlang der Lenkachse translatorisch verschoben wird, um eine Entfaltung des Frontgassacks durch das Fahrzeuglenkrad nicht zu behindern.

Aufgabe der Erfindung ist es, ein Insassensicherheitssystem für ein Kraftfahrzeug sowie ein Verfahren zum Betreiben eines solchen Insassensicherheitssystems zu schaffen, bei dem ein Fahrzeuginsasse, insbesondere ein Fahrer des Kraftfahrzeugs, nach einer Fahrzeugkollision noch besser geschützt ist.

Erfindungsgemäß wird diese Aufgabe gelöst durch ein Insassensicherheitssystem der eingangs genannten Art, bei dem ein außerhalb des Lenkrads verbautes Kniegassackmodul vorgesehen ist, mit einem Kniegassack, der sich bei einer Modulaktivierung in einen Raum zwischen einer Armaturentafel des Kraftfahrzeugs und einem Fahrzeuginsassen erstreckt. Das Kniegassackmodul ist dabei bevorzugt hinter der Armaturentafel des Kraftfahrzeugs verbaut, insbesondere hinter einem Abschnitt der Armaturentafel, welcher einem Fußraum des Kraftfahrzeugs zugewandt ist. Aufgrund der vorteilhaften Position des Lenkradkranzes in der Insassensicherheitsstellung wird eine Entfaltung des Kniegassacks durch das Lenkrad nicht behindert, sodass sich auch fahrerseitig ein wirkungsvoller und zuverlässiger Schutz für die unteren Extremitäten eines Fahrzeuginsassen ergibt. Gegenüber der Lenkbetriebsstellung ist der Lenkradkranz in seiner Insassensicherheitsstellung erfindungsgemäß sowohl entlang der Lenkachse (A) translatorisch verschoben als auch zusätzlich so um eine Drehachse verschwenkt, dass sich die Kranzebene nicht mehr senkrecht zur Lenkachse erstreckt. Ein Schwenkwinkel des Lenkradkranzes von der Lenkbetriebsstellung in die Insassensicherheitsstellung beträgt dabei insbesondere wenigstens 20°.

Durch die Kombination aus translatorischer Bewegung und Schwenkbewegung nimmt das Lenkrad in der Insassensicherheitsstellung des Lenkradkranzes eine vorteilhafte Position ein, in der eine Gassackentfaltung nicht behindert wird und ein Insassenkontakt mit dem Lenkrad nahezu ausgeschlossen ist. Besonders bevorzugt wird die Rückhaltewirkung eines fahrerseitigen Frontgassacks durch die Position des Lenkradkranzes in der Insassensicherheitsstellung sogar positiv beeinflusst.

Erfindungsgemäß ist ferner ein außerhalb des Lenkrads verbautes Frontgassackmodul vorgesehen, wobei das Frontgassackmodul einen Frontgassack aufweist, der sich bei einer Modulaktivierung in einen Raum zwischen dem Lenkradkranz und einem Fahrzeuginsassen erstreckt.

Vorzugsweise ist das Frontgassackmodul hierbei hinter einer Armaturentafel des Kraftfahrzeugs verbaut, insbesondere hinter einem Abschnitt der Armaturentafel, welcher einer Windschutzscheibe des Kraftfahrzeugs zugewandt ist. Alternativ wäre jedoch auch denkbar, dass das Frontgassackmodul im Dach des Kraftfahrzeugs verbaut ist. Dadurch ergeben sich mehr Gestaltungsfreiheiten beim Lenkraddesign sowie bei der Innenraumkonzeption von Kraftfahrzeugen mit automatisierten Fahrfunktionen.

Der Lenkradkranz ist bevorzugt ein geschlossen umlaufender Lenkradkranz, insbesondere ein kreisrunder Lenkradkranz. Durch die geschlossene Form weist der Lenkradkranz eine besonders hohe Stabilität auf und kann in seiner Insassensicherheitsstellung als zuverlässige Abstützung für den Frontgassack dienen.

Vorzugsweise befindet sich der Lenkradkranz durch die translatorische Verschiebung entlang der Lenkachse in seiner Insassensicherheitsstellung näher an einer Armaturentafel als in seiner Lenkbetriebsstellung. Dadurch vergrößert sich der Abstand zwischen dem Fahrzeuginsassen und dem Lenkradkranz und damit der Entfaltungsraum für den Frontgassack.

Gemäß einer bevorzugten Ausführungsform des Insassensicherheitssystems erstreckt sich die Drehachse im Wesentlichen horizontal durch eine 9-Uhr-Position und eine 3-Uhr-Position des Lenkradkranzes, wobei der Lenkradkranz so um die Drehachse schwenkbar ist, dass sich in der Insassensicherheitsstellung eine 12-Uhr-Position des Lenkradkranzes näher an einer Armaturentafel und eine 6-Uhr-Position des Lenkradkranzes weiter entfernt von der Armaturentafel befinden als in der Lenkbetriebsstellung. Aus Sicht des Fahrzeuginsassen schwenkt somit die ihm zugewandte Seite des Lenkradkranzes nach oben, und das Lenkrad wird entlang der Lenkachse translatorisch in Richtung zur Armaturentafel verschoben, bis die Insassensicherheitsstellung des Lenkradkranzes erreicht ist, wobei der Lenkradkranz in seiner Insassensicherheitsstellung insbesondere an der Armaturentafel anliegt. Das Lenkrad ermöglicht in dieser Insassensicherheitsstellung eine reibungslose Entfaltung eines Frontgassacks und/oder Kniegassacks und bildet darüber hinaus ein stabiles Lager, an dem sich ein Frontgassack beim Aufprall des Fahrzeuginsassen abstützen kann.

Gemäß einer alternativen Ausführungsform erstreckt sich die Drehachse im Wesentlichen horizontal durch eine 9-Uhr-Position und eine 3-Uhr-Position des Lenkradkranzes, wobei der Lenkradkranz so um die Drehachse schwenkbar ist, dass sich in der Insassensicherheitsstellung eine 12-Uhr-Position des Lenkradkranzes weiter entfernt von einer Armaturentafel und eine 6-Uhr-Position des Lenkradkranzes näher an der Armaturentafel befinden als in der Lenkbetriebsstellung. Aus Sicht des Fahrzeuginsassen schwenkt somit die ihm zugewandte Seite des Lenkradkranzes nach unten, und das Lenkrad wird entlang der Lenkachse translatorisch in Richtung zur Armaturentafel verschoben, bis die Insassensicherheitsstellung des Lenkradkranzes erreicht ist, wobei der Lenkradkranz in seiner Insassensicherheitsstellung insbesondere an der Armaturentafel anliegt. Auch in dieser Insassensicherheitsstellung ermöglicht das Lenkrad eine reibungslose Entfaltung eines Frontgassacks und/oder Kniegassacks.

Im Übrigen umfasst das Insassensicherheitssystems bevorzugt einen Aktuator zur Beaufschlagung des Lenkradkranzes von der Lenkbetriebsstellung in die Insassensicherheitsstellung. Dieser Aktuator ist insbesondere ein pyrotechnischer Aktuator, der nach einer Kollision des Kraftfahrzeugs eine äußerst kurze Reaktionszeit aufweist und damit eine rasche Verlagerung des Lenkrads von der Lenkbetriebsstellung in die Insassensicherheitsstellung sicherstellt. Alternativ kann als Aktuator aber auch ein vorgespanntes Federelement mit ähnlich kurzer Reaktionszeit oder ein elektromotorischer Antrieb zum Einsatz kommen.

Gemäß einer speziellen Ausführungsvariante ist der Aktuator als (elektromotorischer) Antrieb zur reversiblen Beaufschlagung des Lenkradkranzes zwischen der Lenkbetriebsstellung und der Insassensicherheitsstellung ausgebildet. Ein solches Insassensicherheitssystem eignet sich insbesondere für Fahrzeuge mit einem automatisierten Fahrmodus. Bewegt sich das Kraftfahrzeug im automatisierten Fahrmodus, kann der Antrieb den Lenkradkranz in die Insassensicherheitsstellung verlagern, um dem Fahrzeuginsassen mehr Bewegungsfreiheit zu verschaffen. Der Antrieb verfügt dabei vorzugsweise über eine langsame Antriebsgeschwindigkeit für einen Wechsel des Fahrmodus sowie eine schnelle Antriebsgeschwindigkeit zur Verlagerung des Lenkradkranzes bei einer Fahrzeugkollision im manuellen Fahrmodus. Statt der schnellen Antriebsgeschwindigkeit des Antriebs kann alternativ auch ein separater, zweiter Aktuator vorgesehen sein, zum Beispiel ein pyrotechnischer Aktuator.

Die Erfindung umfasst ferner auch ein Verfahren zum Betreiben eines oben beschriebenen Insassensicherheitssystems, wobei das Insassensicherheitssystem eine elektrische Steuereinheit, einen Crash-Sensor sowie wenigstens ein Gassackmodul umfasst, und wobei das Verfahren folgende Schritte aufweist:
a) Der Crash-Sensor erkennt einen Aufprall oder einen bevorstehenden Aufprall des Kraftfahrzeugs und sendet ein entsprechendes Sensorsignal an die elektrische Steuereinheit;
b) die elektrische Steuereinheit betätigt daraufhin den Aktuator und das wenigstens eine Gassackmodul, wobei der Aktuator früher als das Gassackmodul oder gleichzeitig mit dem Gassackmodul betätigt wird.

Auf diese Weise ist sichergestellt, dass eine Gassackentfaltung nicht durch das Lenkrad, insbesondere durch den Lenkradkranz des Lenkrads, behindert wird.

Weitere Merkmale und Vorteile der Erfindung ergeben sich aus der nachfolgenden Beschreibung bevorzugter Ausführungsformen unter Bezugnahme auf die Zeichnungen. In diesen zeigen
- Figuren 1-3 schematische Schnittansichten eines erfindungsgemäßen Insassensicherheitssystems gemäß einer Ausführungsform vor, während und nach seiner Aktivierung;
- Figur 4 die schematische Schnittansicht des Insassensicherheitssystems gemäß Figur 3 im Vergleich zum Stand der Technik;
- Figuren 5-7 schematische Schnittansichten eines erfindungsgemäßen Insassensicherheitssystems gemäß einer weiteren Ausführungsform vor, während und nach seiner Aktivierung;
- Figur 8 die schematische Schnittansicht des Insassensicherheitssystems gemäß Figur 7 im Vergleich zum Stand der Technik; und
- Figur 9 eine Draufsicht auf ein Lenkrad eines erfindungsgemäßen Insassensicherheitssystems.

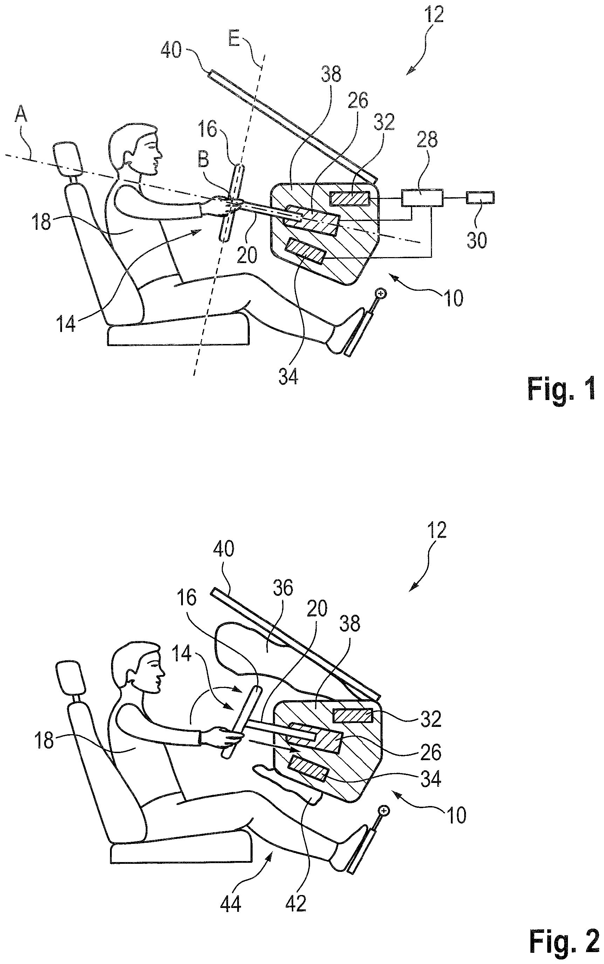

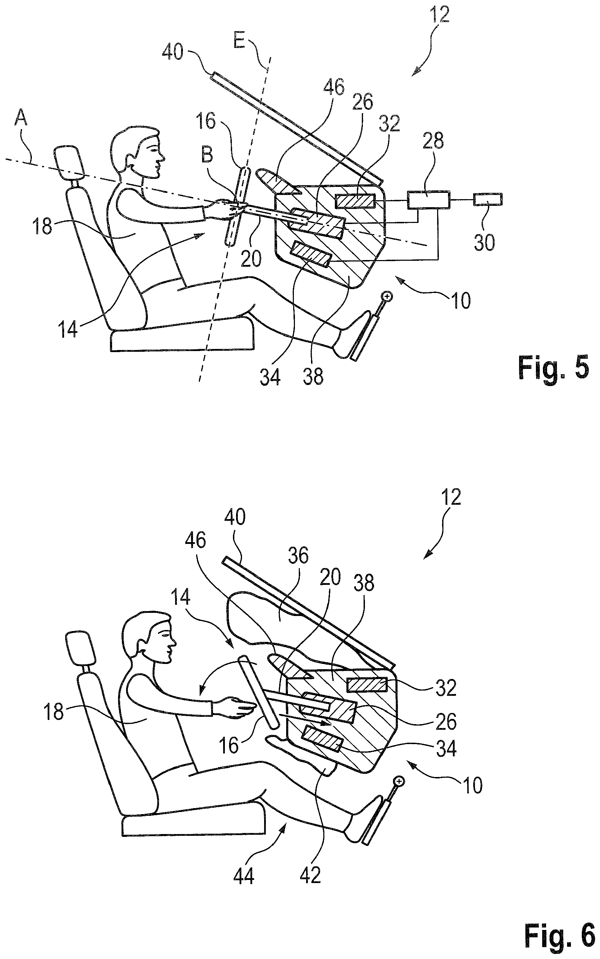

Die Figuren 1 bis 3 veranschaulichen jeweils schematisch die Funktionsweise eines Insassensicherheitssystem 10 für ein Kraftfahrzeug 12 gemäß einer Ausführungsform und zeigen Momentaufnahmen vor, während und nach einer Systemaktivierung. Analog ist in den Figuren 5 bis 7 die Funktionsweise des Insassensicherheitssystems 10 gemäß einer weiteren Ausführungsform dargestellt.

Das Insassensicherheitssystem 10 umfasst ein Lenkrad 14, das zur Fahrtrichtungsänderung um eine Lenkachse A drehbar ist und einen Lenkradkranz 16 zur manuellen Betätigung des Lenkrads 14 aufweist. Der Lenkradkranz 16 ist zwischen einer Lenkbetriebsstellung und einer Insassensicherheitsstellung bewegbar, wobei der Lenkradkranz 16 eine Kranzebene E aufspannt, die sich in der Lenkbetriebsstellung senkrecht zur Lenkachse A erstreckt.

Die Lenkbetriebsstellung gemäß den Figuren 1 und 5 erlaubt einen manuellen Lenkbetrieb, bei dem ein Fahrzeuginsasse 18 durch Verdrehen des Lenkrads 14 um die Lenkachse A eine Fahrtrichtung des Kraftfahrzeugs 12 bestimmt.

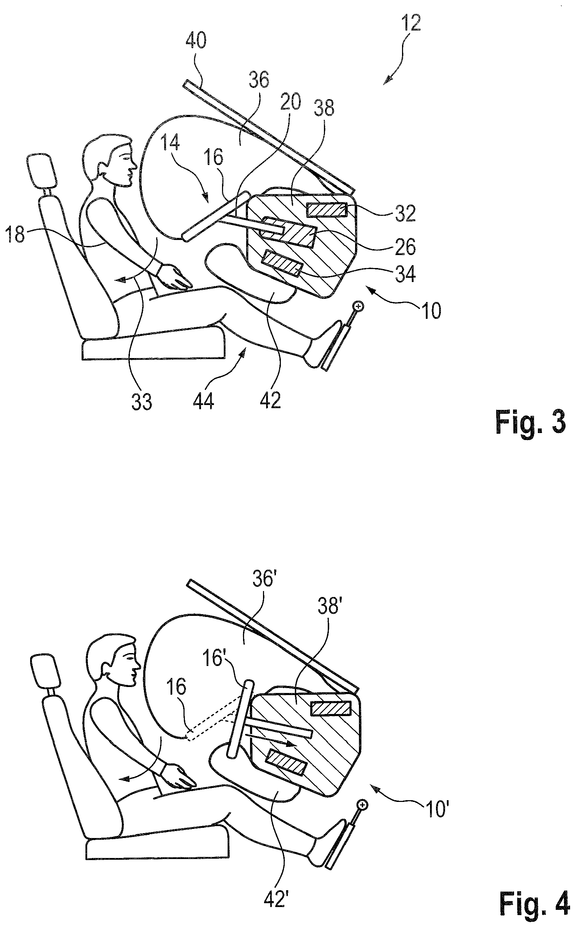

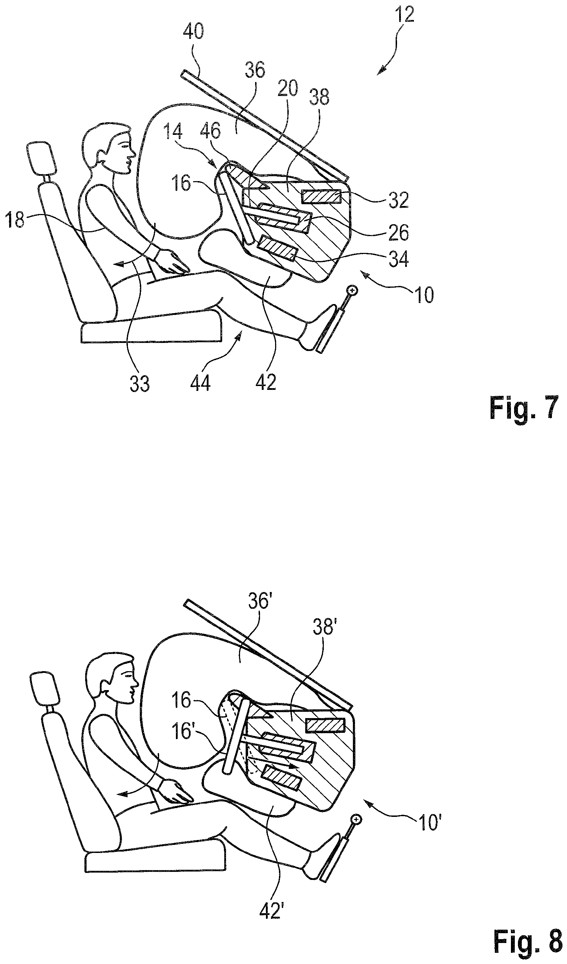

In seiner Insassensicherheitsstellung gemäß den Figuren 3 und 7 nimmt der Lenkradkranz 16 eine Position ein, die bei einer Fahrzeugkollision mit Blick auf die Insassensicherheit besonders vorteilhaft ist. Ein manueller Lenkbetrieb ist in dieser Position nicht mehr möglich. Darüber hinaus kann der Lenkradkranz 16 auch in einem automatisiertem Fahrmodus des Kraftfahrzeugs 12 in die Insassensicherheitsstellung bewegt werden, um dem Fahrzeuginsassen 18 mehr Bewegungsfreiheit zu verschaffen. Ferner befindet sich dann das Lenkrad 14 bei einer Fahrzeugkollision im automatisierten Fahrmodus bereits in einer für die Insassensicherheit vorteilhaften Position.

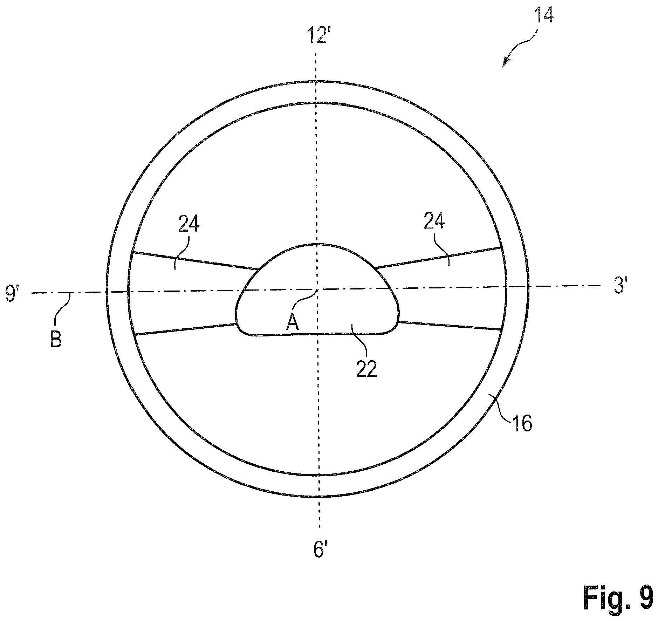

Der Lenkradkranz 16 ist in seiner Insassensicherheitsstellung gegenüber der Lenkbetriebsstellung entlang der Lenkachse A translatorisch verschoben und darüber hinaus so um eine Drehachse B verschwenkt, dass sich die Kranzebene E nicht mehr senkrecht zur Lenkachse A erstreckt. Das Kraftfahrzeug 12 weist zum Beispiel eine Lenkwelle 20 zur drehbaren Lagerung des Lenkrads 14 um die Lenkachse A auf, wobei die Lenkwelle 20 teleskopierbar ausgeführt ist, um eine translatorische Verschiebung des Lenkrads 14 zu ermöglichen. Gemäß Figur 9 weist das Lenkrad 14 abgesehen vom Lenkradkranz 16 eine zentrale Lenkradnabe 22 sowie zwei Lenkradspeichen 24 auf, welche den Lenkradkranz 16 mit der Lenkradnabe 22 verbinden.

Eine Schwenkbewegung des Lenkradkranzes 16 um die Drehachse B lässt sich beispielsweise durch eine drehbare Lagerung des Lenkradkranzes 16 an der Lenkradnabe 22 oder eine drehbare Lagerung des gesamten Lenkrads 14 an der Lenkwelle 20 realisieren, wobei sich die Drehachse B im Wesentlichen horizontal durch eine 9-Uhr-Position und eine 3-Uhr-Position des Lenkradkranzes 16 (siehe Figur 9) erstreckt.

Sofern sich eine Beeinträchtigung der Gassackentfaltung bereits ausschließlich durch eine translatorische Verschiebung des Lenkradkranzes 16 entlang der Lenkachse A oder ausschließlich durch eine Schwenkbewegung des Lenkradkranzes 16 um die Drehachse B zuverlässig verhindern lässt, sind selbstverständlich auch Ausführungsvarianten des Insassensicherheitssystems 10 denkbar, bei denen der Lenkradkranz 16 in seiner Insassensicherheitsstellung gegenüber der Lenkbetriebsstellung entweder translatorisch verschoben oder alternativ um die Drehachse B verschwenkt ist.

Das Insassensicherheitssystem 10 umfasst im Übrigen einen Aktuator 26 zur Beaufschlagung des Lenkradkranzes 16 von der Lenkbetriebsstellung in die Insassensicherheitsstellung. Der Aktuator 26 ist in den dargestellten Ausführungsbeispielen ein pyrotechnischer Aktuator; alternativ wäre aber auch ein vorgespanntes Federelement oder ein elektromotorischer Antrieb denkbar. Insbesondere bei Fahrzeugen mit einem automatisierten oder autonomen Fahrmodus kann der Aktuator 26 auch als Antrieb zur reversiblen Beaufschlagung des Lenkradkranzes 16 ausgebildet sein, um den Lenkradkranz 16 für den manuellen Fahrmodus in seine Lenkbetriebsstellung sowie für den automatisierten Fahrmodus in seine Insassensicherheitsstellung zu bewegen.

Der Aktuator 26 sorgt vorzugsweise sowohl für die translatorische Verschiebung des Lenkrads 14 entlang der Lenkachse A als auch für die Schwenkbewegung des Lenkradkranzes 16 um die Drehachse B. Darüber hinaus kann der Aktuator 26 optional auch eine Rotation um die Lenkachse A bewirken, um das Lenkrad 14 in seine Neutralstellung für Geradeausfahrt zu bewegen.

Wie in den Figuren 1 und 5 angedeutet, weist das Insassensicherheitssystem 10 ferner eine elektrische Steuereinheit 28, einen Crash-Sensor 30 sowie wenigstens ein Gassackmodul 32, 34 auf und wird wie folgt betrieben:
Der Crash-Sensor 30 erkennt zunächst eine Kollision oder eine bevorstehende Kollision des Kraftfahrzeugs 12 und sendet ein entsprechendes Sensorsignal an die elektrische Steuereinheit 28. Daraufhin betätigt die elektrische Steuereinheit 28 den Aktuator 26 und die beiden Gassackmodule 32, 34, wobei der Aktuator 26 früher als die Gassackmodule 32, 34 oder gleichzeitig mit den Gassackmodulen 32, 34 betätigt wird.

Konkret umfasst das Insassensicherheitssystem 10 gemäß den Figuren 1 bis 8 ein außerhalb des Lenkrads 14 verbautes Frontgassackmodul 32, wobei dieses Frontgassackmodul 32 einen Frontgassack 36 aufweist, der sich bei einer Modulaktivierung in einen Raum zwischen dem Lenkradkranz 16 und dem Fahrzeuginsassen 18 erstreckt. In den dargestellten Ausführungsbeispielen ist das Frontgassackmodul 32 hinter einer Armaturentafel 38 des Kraftfahrzeugs 12 verbaut ist, insbesondere hinter einem Abschnitt der Armaturentafel 32, welcher einer Windschutzscheibe 40 des Kraftfahrzeugs 12 zugewandt ist. Ein derartiges Frontgassackmodul 32 weist den Vorteil auf, dass es bei seiner Entfaltung die oberen Extremitäten des Fahrzeuginsassen 18 vom Lenkradkranz 16 weg nach unten beaufschlagt (siehe Figuren 3 und 7, Armrotation 33), was sich positiv auf den Rückhaltekomfort auswirkt und die Insassensicherheit bei einer Fahrzeugkollision erhöht.

Ferner umfasst das Insassensicherheitssystem 10 ein außerhalb des Lenkrads 14 verbautes Kniegassackmodul 34, wobei dieses Kniegassackmodul 34 einen Kniegassack 42 aufweist, der sich bei einer Modulaktivierung in einen Raum zwischen dem Fahrzeuginsassen 18 und der Armaturentafel 38 des Kraftfahrzeugs 12 erstreckt. In den dargestellten Ausführungsbeispielen ist das Kniegassackmodul 34 hinter der Armaturentafel 38 des Kraftfahrzeugs 12 verbaut, insbesondere hinter einem Abschnitt der Armaturentafel 38, der einem Fußraum 44 des Kraftfahrzeugs 12 zugewandt ist.

Sowohl in der Ausführungsform gemäß den Figuren 1 bis 3 als auch in der Ausführungsform gemäß den Figuren 5 bis 7 wird das Lenkrad 14 bei einer Aktivierung des Insassensicherheitssystems 10 translatorisch entlang der Lenkachse A verschoben, sodass es sich in der Insassensicherheitsstellung (Figuren 1 und 5) insgesamt näher an der Armaturentafel 38 befindet als in seiner Lenkbetriebsstellung (Figuren 3 und 7).

Wie in den Figuren 4 und 8 veranschaulicht, sind aus dem Stand der Technik bereits Insassensicherheitssysteme 10' bekannt, die bei Erfassung einer Fahrzeugkollision den Lenkradkranz 16' in der oben beschriebenen Weise translatorisch verschieben. Dabei wird jedoch deutlich, dass der herkömmliche Lenkradkranz 16' auch nach solch einer translatorischen Verlagerung zur Armaturentafel 38' hin die Entfaltung des fahrerseitigen Frontgassacks 36' und/oder des fahrerseitigen Kniegassacks 42' noch behindern oder beeinträchtigen kann.

Abgesehen von der translatorischen Verlagerung des Lenkrads 14 entlang der Lenkachse A wird der Lenkradkranz 16 daher in der Ausführungsform gemäß den Figuren 1 bis 3 zusätzlich so um die Drehachse B verschwenkt, dass sich in der Insassensicherheitsstellung eine 12-Uhr-Position des Lenkradkranzes 16 näher an der Armaturentafel 38 und eine 6-Uhr-Position des Lenkradkranzes 16 weiter entfernt von der Armaturentafel 38 befinden als in der Lenkbetriebsstellung. Die Drehachse B verläuft dabei Sicht des Fahrzeuginsassen 18 im Wesentlichen horizontal durch eine 9-Uhr-Position und eine 3-Uhr-Position des Lenkradkranzes 16.

In der Insassensicherheitsstellung gemäß Figur 3 befindet sich der Lenkradkranz 16 in einer besonders vorteilhaften Position zur Abstützung des Frontgassacks 36. Damit das Lenkrad 14 bei einem Insassenaufprall ein besonders stabiles Lager zur Abstützung des Frontgassacks 36 bildet, ist der Lenkradkranz 16 in Figur 9 als geschlossen umlaufender, insbesondere kreisförmiger Lenkradkranz 16 ausgebildet.

Von der Ausführungsform gemäß den Figuren 1 bis 3 unterscheidet sich das Insassensicherheitssystem 10 gemäß den Figuren 5 bis 7 lediglich dadurch, dass der Lenkradkranz 16 hier so um die Drehachse B schwenkbar ist, dass sich in der Insassensicherheitsstellung eine 12-Uhr-Position des Lenkradkranzes 16 weiter entfernt von der Armaturentafel 38 und eine 6-Uhr-Position des Lenkradkranzes 16 näher an der Armaturentafel 38 befinden als in der Lenkbetriebsstellung.

Das Insassensicherheitssystem 10 gemäß den Figuren 5 bis 7 weist ferner eine optionale Gassackführung 46 an der Armaturentafel 38 auf, um in der Insassensicherheitsstellung gemäß Figur 7 einen Spalt zwischen der Armaturentafel 38 und einer 12-Uhr-Position des Lenkradkranzes 16 zumindest teilweise abzudecken und den Frontgassacks 36 bei seiner Entfaltung über den Spalt hinwegzuleiten.

## Patentansprüche

1. Insassensicherheitssystem für ein Kraftfahrzeug (12), mit
einem Lenkrad (14), das zur Fahrtrichtungsänderung um eine Lenkachse (A) drehbar ist und einen Lenkradkranz (16) zur manuellen Betätigung des Lenkrads (14) aufweist,
wobei der Lenkradkranz (16) zwischen einer Lenkbetriebsstellung und einer Insassensicherheitsstellung bewegbar ist,
wobei der Lenkradkranz (16) eine Kranzebene (E) aufspannt, die sich in der Lenkbetriebsstellung senkrecht zur Lenkachse (A) erstreckt, und
wobei der Lenkradkranz (16) in seiner Insassensicherheitsstellung gegenüber der Lenkbetriebsstellung entlang der Lenkachse (A) translatorisch verschoben ist,
wobei ein außerhalb des Lenkrads (14) verbautes Kniegassackmodul (34) vorgesehen ist, welches einen Kniegassack (42) aufweist, der sich bei einer Modulaktivierung in einen Raum zwischen einer Armaturentafel (38) des Kraftfahrzeugs (12) und einem Fahrzeuginsassen (18) erstreckt,
**dadurch gekennzeichnet, dass** der Lenkradkranz (16) in seiner Insassensicherheitsstellung gegenüber der Lenkbetriebsstellung so um eine Drehachse (B) verschwenkt ist, dass sich die Kranzebene (E) nicht mehr senkrecht zur Lenkachse (A) erstreckt,
wobei ein außerhalb des Lenkrads (14) verbautes Frontgassackmodul (32) vorgesehen ist, welches einen Frontgassack (36) aufweist, der sich bei einer Modulaktivierung in einen Raum zwischen dem Lenkradkranz (16) und einem Fahrzeuginsassen (18) erstreckt.

2. Insassensicherheitssystem nach Anspruch 1, **dadurch gekennzeichnet, dass** das Frontgassackmodul (32) hinter einer Armaturentafel (38) des Kraftfahrzeugs (12) verbaut ist, insbesondere hinter einem Abschnitt der Armaturentafel (38), welcher einer Windschutzscheibe (40) des Kraftfahrzeugs (12) zugewandt ist.

3. Insassensicherheitssystem nach einem der vorhergehenden Ansprüche, **dadurch gekennzeichnet, dass** der Lenkradkranz (16) ein geschlossen umlaufender Lenkradkranz ist.

4. Insassensicherheitssystem nach einem der vorhergehenden Ansprüche, **dadurch gekennzeichnet, dass** sich der Lenkradkranz (16) durch die translatorische Verschiebung entlang der Lenkachse (A) in seiner Insassensicherheitsstellung näher an einer Armaturentafel (38) befindet als in seiner Lenkbetriebsstellung.

5. Insassensicherheitssystem nach einem der vorhergehenden Ansprüche, **dadurch gekennzeichnet, dass** sich die Drehachse (B) im Wesentlichen horizontal durch eine 9-Uhr-Position und eine 3-Uhr-Position des Lenkradkranzes (16) erstreckt, wobei der Lenkradkranz (16) so um die Drehachse (B) schwenkbar ist, dass sich in der Insassensicherheitsstellung eine 12-Uhr-Position des Lenkradkranzes (16) näher an einer Armaturentafel (38) und eine 6-Uhr-Position des Lenkradkranzes (16) weiter entfernt von der Armaturentafel (38) befinden als in der Lenkbetriebsstellung.

6. Insassensicherheitssystem nach einem der Ansprüche 1 bis 4, **dadurch gekennzeichnet, dass** sich die Drehachse (B) im Wesentlichen horizontal durch eine 9-Uhr-Position und eine 3-Uhr-Position des Lenkradkranzes (16) erstreckt, wobei der Lenkradkranz (16) so um die Drehachse (B) schwenkbar ist, dass sich in der Insassensicherheitsstellung eine 12-Uhr-Position des Lenkradkranzes (16) weiter entfernt von einer Armaturentafel (38) und eine 6-Uhr-Position des Lenkradkranzes (16) näher an der Armaturentafel (38) befinden als in der Lenkbetriebsstellung.

7. Insassensicherheitssystem nach einem der vorhergehenden Ansprüche, **dadurch gekennzeichnet, dass** ein Aktuator (26) zur Beaufschlagung des Lenkradkranzes (16) von der Lenkbetriebsstellung in die Insassensicherheitsstellung vorgesehen ist.

8. Insassensicherheitssystem nach Anspruch 7, **dadurch gekennzeichnet, dass** der Aktuator (26) als Antrieb zur reversiblen Beaufschlagung des Lenkradkranzes (16) zwischen der Lenkbetriebsstellung und der Insassensicherheitsstellung ausgebildet ist.

9. Verfahren zum Betreiben eines Insassensicherheitssystems (10) nach Anspruch 7 oder 8, wobei das Insassensicherheitssystem (10) eine elektrische Steuereinheit (28), einen Crash-Sensor (30) sowie wenigstens ein Gassackmodul (32, 34) umfasst, und wobei das Verfahren folgende Schritte aufweist:
a) Der Crash-Sensor (30) erkennt eine Kollision oder eine bevorstehende Kollision des Kraftfahrzeugs (12) und sendet ein entsprechendes Sensorsignal an die elektrische Steuereinheit (28);
b) die elektrische Steuereinheit (28) betätigt daraufhin den Aktuator (26) und das wenigstens eine Gassackmodul (32, 34), wobei der Aktuator (26) früher als das Gassackmodul (32, 34) oder gleichzeitig mit dem Gassackmodul (32, 34) betätigt wird.

## Claims

1. An occupant safety system for a motor vehicle (12), comprising
a steering wheel (14) which can be rotated about a steering axis (A) for changing the driving direction and a steering wheel rim (16) for manually operating the steering wheel (14),
wherein the steering wheel rim (16) is movable between a steering mode position and an occupant safety position,
wherein the steering wheel rim (16) spans a rim plane (E) that extends in the steering mode position perpendicularly to the steering axis (A), and
wherein the steering wheel rim (16) in its occupant safety position is translationally shifted along the steering axis (A) relative to the steering mode position,
wherein a knee airbag module (34) mounted outside the steering wheel (14) is provided which includes a knee airbag (42) which, when the module is activated, extends into a space between an instrument panel (38) of the motor vehicle (12) and a vehicle occupant (18),
**characterized in that** the steering wheel rim (16) in its occupant safety position is pivoted relative to the steering mode position about an axis of rotation (B) so that the rim plane (E) does no longer extend perpendicularly to the steering axis (A),
wherein a front airbag module (32) mounted outside the steering wheel (14) is provided which includes a front airbag (36) which, when the module is activated, extends into a space between the steering wheel rim (16) and a vehicle occupant (18).

2. The occupant safety system according to claim 1, **characterized in that** the front airbag module (32) is mounted behind an instrument panel (38) of the motor vehicle (12), specifically behind a section of the instrument panel (38) facing a windscreen (40) of the motor vehicle (12).

3. The occupant safety system according to any one of the preceding claims, **characterized in that** the steering wheel rim (16) is a closed circumferential steering wheel rim.

4. The occupant safety system according to any one of the preceding claims, **characterized in that**, due to the translational shift along the steering axis (A), the steering wheel rim (16) in its occupant safety position is closer to an instrument panel (38) than in its steering mode position.

5. The occupant safety system according to any one of the preceding claims, **characterized in that** the axis of rotation (B) extends substantially horizontally through a 9 o'clock position and a 3 o'clock position of the steering wheel rim (16), wherein the steering wheel rim (16) can be pivoted about the axis of rotation (B) so that, in the occupant safety position, a 12 o'clock position of the steering wheel rim (16) is closer to an instrument panel (38) and a 6 o'clock position of the steering wheel rim (16) is further distant from the instrument panel (38) than in the steering mode position.

6. The occupant safety system according to any one of the claims 1 to 4, **characterized in that** the axis of rotation (B) extends substantially horizontally through a 9 o'clock position and a 3 o'clock position of the steering wheel rim (16), wherein the steering wheel rim (16) can be pivoted about the axis of rotation (B) so that, in the occupant safety position, a 12 o'clock position of the steering wheel rim (16) is further distant from an instrument panel (38) and a 6 o'clock position of the steering wheel rim (16) is closer to the instrument panel (38) than in the steering mode position.

7. The occupant safety system according to any one of the preceding claims, **characterized in that** an actuator (26) is provided to actuate the steering wheel rim (16) from the steering mode position into the occupant safety position.

8. The occupant safety system according to claim 7, **characterized in that** the actuator (26) is designed as a drive for reversibly actuating the steering wheel rim (16) between the steering mode position and the occupant safety position.

9. A method of operating an occupant safety system (10) according to claim 7 or 8, wherein the occupant safety system (10) comprises an electric control unit (28), a crash sensor (30) as well as at least one airbag module (32, 34), and wherein the method comprises the following steps:
a) the crash sensor (30) detects a collision or an imminent collision of the motor vehicle (12) and transmits a corresponding sensor signal to the electric control unit (28);
b) the electric control unit (28) then activates the actuator (26) and the at least one airbag module (32, 34), the actuator (26) being activated earlier than the airbag module (32, 34) or simultaneously with the airbag module (32, 34).

## Revendications

1. Système de sécurité des occupants pour un véhicule automobile (12), comprenant
un volant de direction (14) qui peut tourner autour d'un axe de direction (A) pour changer la direction de marche et qui présente une jante de volant de direction (16) pour l'actionnement manuel du volant de direction (14),
pour lequel la jante de volant de direction (16) est mobile entre une position de conduite et une position de sécurité des occupants,
pour lequel la jante de volant de direction (16) s'étend sur un plan de jante (E) qui, dans la position de conduite, s'étend perpendiculairement à l'axe de direction (A), et
pour la jante de volant de direction (16) est déplacée en translation le long de l'axe de direction (A) dans sa position de sécurité des occupants par rapport à la position de conduite,
pour lequel un module de coussin gonflable de genou (34) monté à l'extérieur du volant de direction (14) est prévu, lequel présente un coussin gonflable de genou (42) qui, lors d'une activation du module, s'étend dans un espace entre un tableau de bord (38) du véhicule automobile (12) et un occupant du véhicule (18),
**caractérisé en ce que** la jante de volant de direction (16), dans sa position de sécurité de l'occupant, est pivotée autour d'un axe de rotation (B) par rapport à la position de conduite, de telle sorte que le plan de la jante (E) ne s'étend plus perpendiculairement à l'axe de direction (A),
pour lequel un module airbag frontal (32) monté à l'extérieur du volant de direction (14) est prévu, lequel présente un coussin gonflable frontal (36) qui, lors d'une activation du module, s'étend dans un espace entre la jante de volant de direction (16) et un occupant du véhicule (18).

2. Système de sécurité pour occupants selon la revendication 1, **caractérisé en ce que** le module de coussin gonflable avant (32) est monté derrière un tableau de bord (38) du véhicule automobile (12), en particulier derrière une partie du tableau de bord (38) qui est tournée vers un pare-brise (40) du véhicule automobile (12).

3. Système de sécurité des occupants selon l'une des revendications précédentes, **caractérisé en ce que** la jante de volant (16) est une jante de volant périphérique fermée.

4. Système sécurité des occupants selon l'une des revendications précédentes, **caractérisé en ce que** la jante de volant (16) se trouve plus près d'un tableau de bord (38) dans sa position de sécurité des occupants que dans sa position de conduite, en raison du déplacement en translation le long de l'axe de direction (A).

5. Système de sécurité pour occupants selon l'une des revendications précédentes, **caractérisé en ce que** l'axe de rotation (B) s'étend sensiblement horizontalement entre une position à 9 heures et une position à 3 heures de la jante de volant (16), pour lequel la jante de volant (16) peut ainsi pivoter autour de l'axe de rotation (B), de sorte que, dans la position de sécurité des occupants, une position à 12 heures de la jante de volant (16) se trouve plus proche d'un tableau de bord (38) et une position à 6 heures de la jante de volant (16) se trouve plus éloignée du tableau de bord (38) que dans la position de conduite.

6. Système de sécurité des occupants selon l'une des revendications 1 à 4, **caractérisé en ce que** l'axe de rotation (B) s'étend sensiblement horizontalement à travers une position à 9 heures et une position à 3 heures de la jante de volant (16), pour lequel la jante de volant (16) peut ainsi pivoter autour de l'axe de rotation (B), de sorte que, dans la position de sécurité des occupants, une position à 12 heures de la couronne de volant (16) est plus éloignée d'un tableau de bord (38) et une position à 6 heures de la jante de volant (16) est plus proche du tableau de bord (38) que dans la position de conduite.

7. Système de sécurité des occupants selon l'une des revendications précédentes, **caractérisé en ce qu'**un actionneur (26) est prévu pour passer la jante de volant (16) de la position de conduite à la position de sécurité des occupants.

8. Système de sécurité pour occupants selon la revendication 7, **caractérisé en ce que** l'actionneur (26) est réalisé sous forme d'un moyen d'entraînement pour passer de manière réversible la jante de volant (16) entre la position de conduite et la position de sécurité pour occupants.

9. Procédé de fonctionnement d'un système de sécurité des occupants (10) selon la revendication 7 ou 8, pour lequel le système de sécurité des occupants (10) comprend une unité de commande électrique (28), un capteur de collision (30) ainsi qu'au moins un module airbag (32, 34), et pour lequel le procédé présente les étapes suivantes :
a) le capteur de collision (30) détecte une collision ou une collision imminente du véhicule automobile (12) et envoie un signal de capteur correspondant à l'unité de commande électrique (28) ;
b) l'unité de commande électrique (28) actionne ensuite l'actionneur (26) et l'au moins un module de coussin airbag (32, 34), l'actionneur (26) étant actionné plus tôt que le module de coussin airbag (32, 34) ou en même temps que le module airbag (32, 34).
